# EUROPEAN PATENT APPLICATION

(11) **EP 4 537 931 A1**
(43) Date of publication of application: **16.04.2025**
(21) Application number: 23823436.3
(22) Date of filing: 23.01.2023
(51) Int. Cl.: B01J 19/00, H01M 4/36, H01M 10/0562

(54) **REACTION SYSTEM AND CLEANING METHOD**

(30) Priority: 13.06.2022 JP 2022095239
(71) Applicant: The Japan Steel Works, Ltd., Tokyo 141-0032 (JP)
(72) Inventor: HIRAMATSU, Seiya, Tokyo 141-0032 (JP); UEDA, Naoki, Tokyo 141-0032 (JP); FURUKI, Kenichi, Tokyo 141-0032 (JP); NAKAMURA, Satoru, Tokyo 141-0032 (JP)
(74) Representative: Simmons & Simmons LLP (Munich)
(86) International application number: PCT/JP2023/001877
(87) International publication number: WO 2023/243131

(57) **Abstract**

Provided is a reaction system (1), wherein a reactor (210) is provided in a sealed space covered by a shutoff mechanism (111), and has a feed port for material to be treated and an outlet port for a product. A transport device (221) transports the material inside a cylinder along the extension direction of the cylinder. A fluid supply pipe (204) is connected to a fluid inlet provided in the reactor and supplies production fluid. A fluid discharge pipe (206) discharges the fluid inside the reactor from a fluid outlet provided in the reactor. During a cleaning process, a cleaning medium supply device (232) is branched and connected to the feed port and/or the fluid supply pipe and can input a cleaning medium into the reactor.

## Description

### Technical Field

The present invention relates to a reaction system and a cleaning method.

### Background Art

There has been a producing system that produces a desired product by stirring, and the like, predetermined raw materials under a predetermined environment.

For example, Patent Literature 1 discloses the following reaction apparatus. The reaction apparatus includes a screw feeder body that serves as a pressure reaction container, a catalyst supplying unit that introduces a catalyst into the screw feeder body, and a low hydrocarbon supplying unit that introduces low hydrocarbon into the screw feeder body. Further, this reaction apparatus includes a screw that conveys generated nano carbon, a solid delivery unit that delivers the catalyst and the nano carbon conveyed by the screw, and a gas delivery unit that delivers generated hydrogen to outside of the feeder body.

### Citation List

### Patent Literature

Patent Literature 1: Japanese Unexamined Patent Application Publication No. 2006-290682

### Summary of Invention

### Technical Problem

Meanwhile, in a case where a product with high reactivity such as, for example, an electrolyte and an active material for an all-solid-state lithium-ion battery is produced using the system as described above, there may be a case of producing the product while maintaining a sealed environment by blocking at least a part of the system from an outdoor air, because toxic hydrogen sulfide is generated as a result of moisture in the ambient air reacting with a substance to be treated or the product. In such a system, it is necessary to give consideration so that the outdoor air does not flow into a space on an indoor air side. In the meantime, for making measurements on wear amounts of components constituting the reaction system or repair and replacement of the components, there may be a case where equipment provided in the sealed environment is required to be cleaned in the inside of the equipment without generating toxic gas. In such a case, there is a problem of securing the safety of work arises in that, for example, it is necessary to cover the whole of a factory building or the reaction system with an exhaust apparatus or it is necessary to wear a protector such as chemical protective clothing and a protective mask.

The present disclosure has been made to solve such a problem and can provide a reaction system, and the like, capable of preferably cleaning a reactor having a space blocked from an outdoor air.

A reaction system according to the present disclosure is a reaction system capable of executing a producing step of producing a predetermined product from a substance to be treated. The reaction system includes a blocking mechanism, a reactor, a conveyance apparatus, a fluid supply tube, a fluid discharge tube, a cleaning medium supply apparatus, and a collection mechanism. A blocking mechanism is configured to be able to block indoor air from outdoor air. The reaction system has a closed space including the indoor air isolated by the blocking mechanism. The reactor is a cylindrical body having a supply port of a substance to be treated and a delivery port of a product. The conveyance apparatus conveys the substance to be treated along an extending direction of the cylindrical body inside the cylindrical body. The fluid supply tube is connected to a fluid inlet provided in the reactor and supplies a fluid for production. The fluid discharge tube discharges a fluid inside the reactor from a fluid outlet provided in the reactor. The cleaning medium supply apparatus branches and is connected to at least any one of the supply port or the fluid supply tube and can inject a cleaning medium into the reactor as a cleaning step. The collection mechanism is connected to at least any one of the fluid discharge tube or the delivery port and collects a discharge discharged as a result of the cleaning medium being injected in the cleaning step.

A cleaning method according to the present disclosure is a cleaning method of a reaction system capable of executing a producing step of producing a predetermined product from a substance to be treated, the reaction system including a partition wall capable of blocking indoor air from outdoor air, a reactor that is a cylindrical body provided in a sealed space covered by the partition wall and including a supply port of a substance to be treated and a delivery port of a product, a conveyance apparatus that conveys the substance to be treated along an extending direction of the cylindrical body inside the cylindrical body, a fluid supply tube connected to a fluid inlet provided in the reactor for supplying a fluid for production, and a fluid discharge tube that discharges a fluid inside the reactor from a fluid outlet provided in the reactor. The above-described cleaning method includes injecting a cleaning medium to the reactor from at least any one of the supply port or the fluid supply tube and collecting from at least any one of the fluid discharge tube or the delivery port, a discharge discharged as a result of the cleaning medium being injected as a cleaning step.

According to the present disclosure, it is possible to provide a reaction system, and the like, capable of preferably cleaning a reactor in a state of being blocked from an outdoor air.

### Brief Description of Drawings

Fig. 1 is an overall configuration diagram of a reaction system according to a first embodiment;
Fig. 2 is a block diagram of the reaction system according to the first embodiment;
Fig. 3 is a flowchart of a producing step to be executed by the reaction system;
Fig. 4 is a flowchart of a cleaning step to be executed by the reaction system;
Fig. 5 is a view illustrating flow of a substance to be treated in the reaction system;
Fig. 6 is an overall configuration diagram of a reaction system according to a second embodiment; and
Fig. 7 is an overall configuration diagram of a reaction system according to a third embodiment.

### Description of Embodiments

While the present invention will be described below through embodiments of the invention, the invention according to the claims is not limited to the following embodiments. Further, not all the components described in the embodiments are essential as means for solving the problem. To clarify description, the following description and drawings are omitted and simplified as appropriate. Note that the same components are denoted by the same reference numerals in the respective drawings, and redundant description is omitted as necessary.

### <First Embodiment>

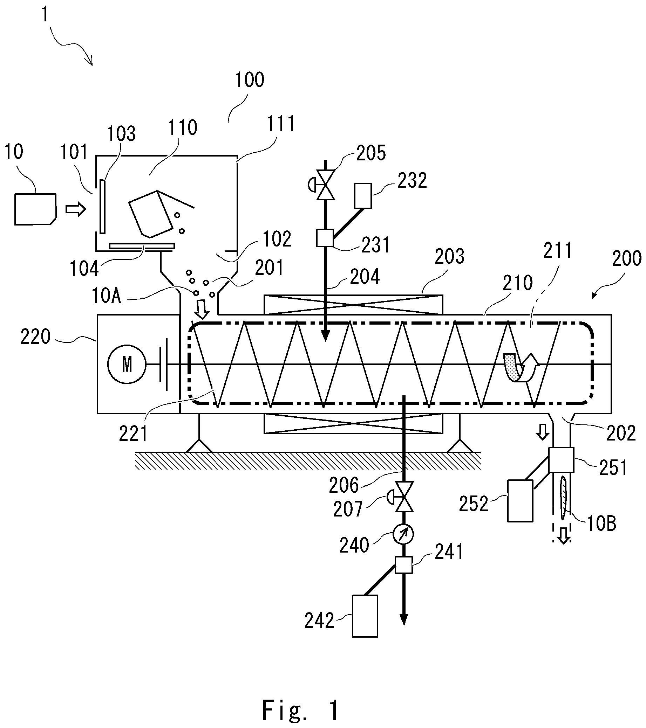

An overall configuration of a reaction system 1 according to the present embodiment will be described with reference to Fig. 1. Fig. 1 is an overall configuration diagram of the reaction system 1. The reaction system 1 illustrated in Fig. 1 produces a product by performing predetermined treatment on a substance to be treated. The product to be produced by the reaction system 1 is, for example, a member for a battery such as a solid electrolyte and a positive electrode active material to be used in a sulfide-based all-solid-state lithium-ion secondary battery. Note that while the predetermined treatment is not particularly limited provided that the treatment is means to be used in a process of changing a substance to be treated to a product, the predetermined treatment is, for example, temperature change such as heating and cooling. The predetermined treatment is, for example, stress transmission such as stirring, mixture, kneading and crushing. The predetermined treatment is, for example, reaction associated with giving and receiving of electrons and radicals. The predetermined treatment is, for example, contact with a catalyst.

In a case where a member for a battery is produced, the reaction system 1 needs to execute each step at a predetermined temperature and in a predetermined atmosphere. The predetermined atmosphere is, for example, a dew point temperature of about minus 70 degrees Celsius. Further, the predetermined temperature is, for example, about 20 degrees Celsius to 1000 degrees Celsius. Further, when the member for the battery is produced, there is a case where hydrogen sulfide is generated from a substance to be treated or a product or a case where hydrogen sulfide is supplied to a reactor. It is therefore desired that the reaction system 1 executes the above-described producing step in an environment blocked from an outdoor air.

Further, while the reaction system 1 executes the above-described producing step for producing the product, the reaction system 1 is configured to be able to execute a cleaning step for cleaning the inside of the reaction system 1 in a case where the reaction system 1 is not executing the producing step. The reaction system 1 executes the producing step while maintaining an environment blocked from the outdoor air. Thus, the reaction system 1 executes the cleaning step while maintaining the environment blocked from the outdoor air also in the cleaning step so that the outdoor air does not flow into the indoor air side or toxic gas generated on the indoor air side does not leak out to the outdoor air side.

The reaction system 1 includes as main components, a substance-to-be-treated injection block 100 and a treatment block 200. The reaction system 1 accepts a substance-to-be-treated container 10 from a substance-to-be-treated inlet 101 of the substance-to-be-treated injection block 100 and injects a substance to be treated 10A encapsulated into the accepted substance-to-be-treated container 10 to the treatment block 200 in the producing step. Further, the reaction system 1 performs cleaning by accepting a predetermined medium for cleaning in the cleaning step.

The substance-to-be-treated injection block 100 includes the substance-to-be-treated inlet 101 and a substance-to-be-treated slot 102 in a substance-to-be-treated acceptance space 110 covered by a blocking mechanism 111 that blocks the indoor air from the outdoor air. The blocking mechanism 111 is a structure that blocks the indoor air from the outdoor air in the reaction system 1 and is one aspect of a blocking mechanism. Note that the blocking mechanism 111 may be, for example, a structure like a partition wall or may utilize a fluid like an air curtain. The reaction system 1 has a closed space including the indoor air isolated by the blocking mechanism 111. In the substance-to-be-treated acceptance space 110, a robot arm, or the like, for accepting the substance-to-be-treated container 10 as appropriate and injecting the substance to be treated 10A stored in the accepted substance-to-be-treated container 10 to the treatment block 200 is provided.

The substance-to-be-treated inlet 101 is an opening provided in a substance-to-be-treated container 10 acceptance portion which is a space covered by a partition wall for accepting the substance-to-be-treated container 10. At the substance-to-be-treated inlet 101, a door 103 for accepting a substance to be treated is provided so as to be able to be open and closed. When the door 103 for accepting the substance to be treated is in a closed state, the inside of the substance-to-be-treated injection block 100 is blocked from the outdoor air.

The substance-to-be-treated slot 102 is an opening for injecting the substance to be treated 10A that is stored in the substance-to-be-treated container 10 and accepted by the substance-to-be-treated injection block 100, to the treatment block 200. At the substance-to-be-treated slot 102, a door 104 for injecting a substance to be treated is provided so as to be able to be open and closed. When the door 104 for injecting the substance to be treated is in a closed state, the inside of the substance-to-be-treated injection block 100 is blocked from the treatment block 200.

In the above-described configuration, in the substance-to-be-treated injection block 100, in a case where the door 103 for accepting the substance to be treated is in an open state, the door 104 for injecting the substance to be treated is in a closed state. In a similar manner, in a case where the door 104 for injecting the substance to be treated is in an open state, the door 103 for accepting the substance to be treated is in a closed state. Further, the substance-to-be-treated injection block 100 also has means for suctioning the indoor air as appropriate (not illustrated) or means for filling the indoor air with inert gas, or the like (not illustrated). This enables the reaction system 1 to maintain a state of being blocked from the outdoor air when the substance to be treated 10A is accepted into the treatment block 200.

In the present disclosure, the indoor air being blocked from the outdoor air means preventing at least one type of a substance of an amount exceeding a threshold of a predetermined amount among substances included in the outdoor air from flowing into a space on the indoor air side. Alternatively, the indoor air being blocked from the outdoor air means preventing at least one type of a substance of an amount exceeding a threshold of a predetermined amount among substances included in the indoor air from flowing out to a space on the outdoor air side. In this event, the space on the indoor air side is at least part of the space inside the reaction system and is a space in which a substance that can generate a toxic substance exists in a case where at least one type of a substance of an amount exceeding a threshold of a predetermined amount among substances included in the outdoor air or a cleaning medium comes into contact. In other words, a location or a range of the space on the indoor air side is not particularly limited provided that the space is a space in which the above-described substance exists. The space on the indoor air side may be, for example, the substance-to-be-treated injection block 100 or may be part of the reactor 210. Note that the space on the outdoor air side may be a space outside the reaction system 1 or may be a space not corresponding to the space on the indoor air side inside the reaction system 1 including the blocking mechanism. Note that while the above-described predetermined "amount" is not particularly limited provided that the amount is an amount that can be quantified by measurement equipment, such as a concentration, a weight, a volume and a pressure of a substance, the amount is preferably a concentration and more preferably a concentration at a temperature of a space to be subjected to the cleaning step in a case where the substance is a gas.

Further, the toxic substance in the present disclosure may be interpreted as at least any one of a substance that may be harmful to health of a human body, a substance that may be a physical hazard such as catching fire and ignition, a substance that may be a chemical hazard such as corrosion to a structure of an apparatus, a work area, or the like, or a substance that may be hazardous to an environment such as ambient air, water quality and soil. In other words, the toxic substance may be interpreted as a substance for which attention is called or warning is placed by any description indicating a risk and a harmful effect, a symbol mark, and the like, in a safety data sheet. The toxic substance may be, for example, a substance designated by the laws of Japan, such as a specified chemical substance, a poisonous substance, and a deleterious substance.

Further, the substance-to-be-treated injection block 100 may accept a predetermined cleaning medium in place of the substance-to-be-treated container 10. The cleaning medium to be accepted by the substance-to-be-treated injection block 100 may be, for example, an abrasive, a solid in the form of beads, or the like, for removing a residue existing in the treatment block 200 or a liquid like a cleaning liquid. Note that the above-described door 103 for accepting the substance to be treated and the door 104 for injecting the substance to be treated may be, for example, a valve body like a butterfly valve or may be a ball valve or a shutter. The door 103 for accepting the substance to be treated and the door 104 for injecting the substance to be treated do not have to be a structure like a valve body or a wall body. In other words, the door 103 for accepting the substance to be treated and the door 104 for injecting the substance to be treated may block inside from outside using, for example, means using air current like an air curtain. However, forms and structures of the door 103 for accepting the substance to be treated and the door 104 for injecting the substance to be treated are not limited to the above-described configurations.

Subsequently, the treatment block 200 will be described. The treatment block 200 is a reaction apparatus that accepts the substance to be treated 10A and generates a product 10B. The treatment block 200 generates the product 10B by executing a producing step of applying stimulus such as kneading, stirring or crushing to the substance to be treated 10A under an atmosphere at a predetermined temperature. After generating the product 10B, the treatment block 200 delivers the generated product 10B from a delivery port 202.

The treatment block 200 includes as main components, a supply port 201, the delivery port 202, a temperature control apparatus 203, a reactor 210, a treatment space 211, a drive apparatus 220 and a conveyance apparatus 221. Further, the treatment block 200 includes as a component that controls the atmosphere of the treatment space 211, a fluid supply tube 204, a supply tube control valve 205, a fluid discharge tube 206 and a discharge tube control valve 207.

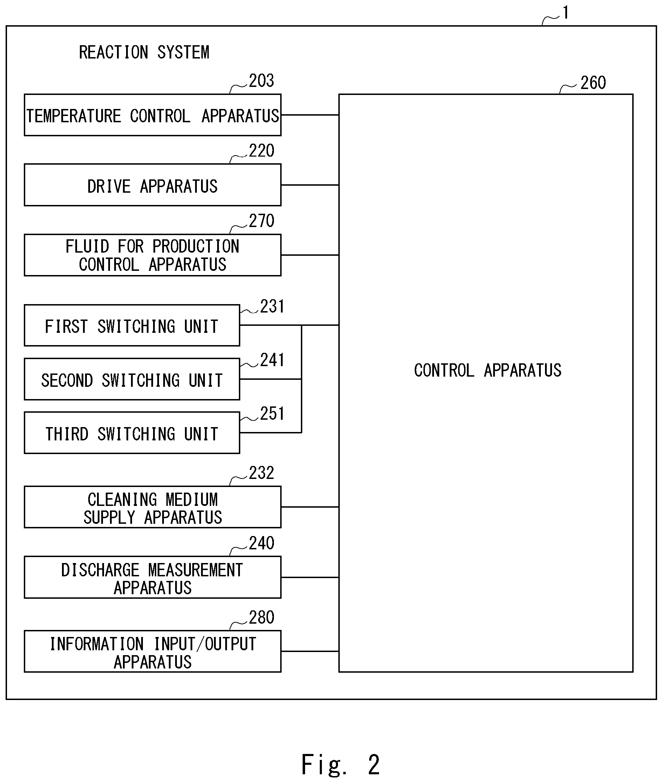

The supply port 201 is an inlet that accepts a predetermined material into the treatment space 211. The supply port 201 illustrated in Fig. 2 accepts the substance to be treated 10A injected from the substance-to-be-treated slot 102 of the substance-to-be-treated injection block 100. The substance to be treated 10A accepted from the supply port 201 is supplied to the treatment space 211. Note that the substance-to-be-treated slot 102 and the supply port 201 may be constituted with a continuous partition wall. Alternatively, the substance-to-be-treated slot 102 and the supply port 201 may be connected by an aspect in which the indoor air can be blocked from the outdoor air. For example, the substance-to-be-treated slot 102 and the supply port 201 may be fastened via an O-ring formed with a nitrile rubber, a fluorine resin, or a silicon resin, or a gasket formed with a metal or a resin, or the substance-to-be-treated slot 102 and the supply port 201 do not have to be directly connected by a cylindrical chassis being placed between the substance-to-be-treated slot 102 and the supply port 201.

The treatment space 211 is a treatment space blocked from the outdoor air by the partition wall and the reactor 210. In the treatment space 211, the treatment block 200 kneads, stirs, mixes and crushes the substance to be treated 10A under a predetermined environment to generate the product 10B.

The reactor 210, which is a cylindrical member extending in a horizontal direction, is a chassis of the treatment block 200. A cross-sectional shape of the reactor 210 is not particularly limited and may be a circle, an oval or a polygon. Further, the cross-sectional shape of the reactor 210 may be a shape combining a plurality of figures.

While a material forming the reactor 210 is not particularly limited, the material is preferably resistant to hydrogen sulfide gas generated inside, predetermined temperature change, and the like. Thus, a member constituting the reactor 210 can be, for example, formed with an alloy, ceramics, carbon and a compound material containing two or more of them. The alloy is a metal member containing as a component, at least one of alloy elements such as nickel, cobalt, chrome, molybdenum, tungsten, tantalum, titanium, iron, copper, aluminum, silicon, boron and carbon. The ceramics is a ceramic member like oxide such as aluminum oxide and zirconia, carbide such as silicon carbide and titanium carbide, nitride such as silicon nitride and titanium nitride, and boride such as chromium boride. Further, the carbon is a carbon member like crystalline graphite and fiber-reinforced graphite. A material of at least inside of the reactor 210 may be constituted with a member containing an alloy, ceramics or carbon.

The reactor 210, which is provided in a sealed space covered by the blocking mechanism 111, is, for example, a cylindrical body including the supply port 201 of the substance to be treated on one end side and the delivery port 202 of the product on the other end side. The reactor 210 forms the treatment space 211 inside and accommodates the conveyance apparatus 221 in the treatment space 211. Further, the reactor 210 accepts the substance to be treated from the supply port 201 on the upstream side. Still further, the reactor 210 delivers the product 10B to outside from the delivery port 202 on the downstream side. Note that the reactor 210 may include the supply port 201 and the delivery port 202 at end portions or at positions separated from the end portions.

Note that in the present disclosure, the upstream and the downstream are defined as follows. In other words, a position closer to the supply port 201 viewed from a point A that is an arbitrary position on a path from the supply port 201 to the delivery port 202 is defined as an upstream position, and a position closer to the delivery port 202 viewed from the point A is defined as a downstream position. Further, the upstream side indicates an upstream direction viewed from the point A, and the downstream side indicates a downstream direction viewed from the point A.

The reactor 210 is covered by the temperature control apparatus 203 at an intermediate portion, and the inside of the reactor 210 is configured to be able to be heated or cooled. Further, the reactor 210 is connected to the fluid supply tube 204 at the intermediate portion, and when the supply tube control valve 205 opens, the reactor 210 accepts a predetermined fluid from the fluid supply tube 204. The predetermined fluid is, for example, inert gas such as nitrogen. Further, the reactor 210 is connected to the fluid discharge tube 206 at the intermediate portion and discharges a fluid containing hydrogen sulfide gas generated in the treatment space 211 to the fluid discharge tube 206 as a result of the discharge tube control valve 207 opening.

The temperature control apparatus 203 includes a heating apparatus or a cooling apparatus and controls a temperature inside the reactor 210, that is the treatment space 211. The temperature control apparatus 203 includes a heating apparatus so as to enclose the circumference of the cylindrical reactor 210 at the intermediate portion of the reactor 210. The heating apparatus includes an arbitrary heater that can control a temperature, such as, for example, a sheath heater, a coil heater and a ceramic heater. The heating apparatus performs heating, for example, in a range from a normal temperature to about 1000 degrees. The temperature control apparatus 203 may set different temperatures for each region of the intermediate portion of the reactor 210 along a long axis direction of the conveyance apparatus 221. The temperature control apparatus 203 may set different temperatures for each region in a vertical direction (short axis direction) of the reactor 210.

The drive apparatus 220 includes a motor and a driving force transmission unit to be fitted to a drive axis projecting from the motor and drives the conveyance apparatus 221. The conveyance apparatus 221 in Fig. 1 is, for example, a screw extending from one end side to the other end side of the treatment space 211. One screw may be provided or two or more screws may be provided. The conveyance apparatus 221 rotates the substance to be treated so as to be able to convey the substance to be treated in an extending direction of the cylindrical body inside the cylindrical body of the reactor 210. The conveyance apparatus 221 is rotated by the drive apparatus 220. The drive apparatus 220 can control, for example, a driving direction and driving speed of the conveyance apparatus 221. Note that a shape and a form of the conveyance apparatus 221 are not particularly limited. For example, the conveyance apparatus 221 is not limited to a screw that conveys the substance to be treated by rotation and may be a belt conveyer or a rotating drum body. The conveyance apparatus 221 may be a combination of a screw and a plurality of conveyance apparatuses such as an air blower.

The fluid supply tube 204 is connected to a fluid inlet provided in the reactor 210 and supplies a fluid for production. The fluid supply tube 204 includes a supply tube control valve 205. The fluid supply tube 204 supplies a predetermined fluid to the treatment space 211 by the supply tube control valve 205 opening.

Further, the fluid supply tube 204 includes a first switching unit 231. The first switching unit 231 includes a mechanism of switching between the supply tube control valve 205 that supplies the fluid for production and a cleaning medium supply apparatus 232 branching and provided in the fluid supply tube 204. In the producing step, the first switching unit 231 is set so that the fluid for production is supplied from the supply tube control valve 205 to the treatment space 211. Further, in the cleaning step, the first switching unit 231 is set so that the cleaning fluid is supplied from the cleaning medium supply apparatus 232 to the treatment space 211.

The cleaning medium supply apparatus 232 supplies the cleaning fluid to the treatment space 211 in the cleaning step. The cleaning medium supply apparatus 232 includes, for example, a syringe, or the like, with which a predetermined cleaning fluid can drop. The cleaning medium supply apparatus 232 is preferably an apparatus that can supply the cleaning fluid of an amount set in advance. The cleaning medium supply apparatus 232 is more preferably an apparatus that can be quantitatively controlled via a control signal, or the like. The cleaning medium supply apparatus 232 may be, for example, a dispenser, a syringe or a supply apparatus to which a mass flow meter is attached. The cleaning medium supply apparatus 232 may be an apparatus other than the above when the apparatus can supply the cleaning fluid. Note that the cleaning medium supply apparatus 232 may branch and be connected to the supply port 201. In other words, the cleaning medium supply apparatus 232 branches and is connected to at least any one of the supply port 201 or the fluid supply tube 204 and can inject the cleaning medium to the reactor as the cleaning step. Note that while the above-described "amount" of the cleaning fluid is not particularly limited provided that the amount is an amount can be quantified by measurement equipment, such as a concentration, a volume, a weight and a pressure, the amount may be, for example, a flow rate like milliliter per hour.

The fluid discharge tube 206 discharges a fluid inside the reactor from a fluid outlet provided in the reactor 210. The fluid discharge tube 206 includes a discharge tube control valve 207. The fluid discharge tube 206 discharges the fluid existing in the treatment space 211 to outside of the treatment space 211 by the discharge tube control valve 207 opening.

The fluid discharge tube 206 includes a second switching unit 241. The second switching unit 241 is placed in the fluid discharge tube 206 for collecting the fluid for production, or the like, in the producing step and guides the fluid after cleaning discharged in the cleaning step to the fluid collection mechanism 242. In other words, the second switching unit 241 includes a mechanism of switching between a flow path of the fluid discharge tube 206 in the producing step and a flow path of the fluid discharge tube 206 in the cleaning step.

The fluid collection mechanism 242 is connected to the fluid discharge tube 206 and collects a discharge discharged to the fluid discharge tube 206 by the cleaning medium being injected in the cleaning step. The fluid collection mechanism 242 includes a container for accumulating the collected fluid. Further, the fluid collection mechanism 242 may include a filter, a separator, a settling tank, or the like, as a separation apparatus for separating the collected fluid. Still further, the fluid collection mechanism 242 may include a scrubber, a burner, activated carbon, or the like, as a purification apparatus for purifying the collected fluid as appropriate.

The delivery port 202 is a delivery port that delivers the product 10B that is a product generated by performing predetermined treatment on the material accepted from the supply port 201. More specifically, the delivery port 202 delivers, for example, the product 10B in a particulate form or in a slurry form below the delivery port 202. The delivery port 202 is connected to the next step while a state of being blocked from the outdoor air is maintained.

The delivery port 202 is connected to a third switching unit 251. The third switching unit 251 guides the discharge after cleaning discharged in the cleaning step to a discharge collection mechanism 252. In other words, the third switching unit 251 includes a mechanism of switching between a flow path for delivering the product 10B in the producing step and a flow path for guiding the discharge after cleaning to the discharge collection mechanism 252 in the cleaning step.

The discharge collection mechanism 252 is connected to the delivery port 202 and collects the discharge discharged to the delivery port 202 by the cleaning medium being injected in the cleaning step. The discharge collection mechanism 252 includes a container for accumulating the collected discharge. Further, the discharge collection mechanism 252 may include a filter, a separator, a settling tank, or the like, as a separation apparatus for separating a plurality of substances included in the collected discharge. Further, the discharge collection mechanism 252 may include a scrubber, a burner, activated carbon, or the like, as a purification apparatus for purifying the collected fluid as appropriate.

A discharge measurement apparatus 240 is provided in the fluid discharge tube 206. The discharge measurement apparatus 240 measures components of the discharge in the cleaning step. The components to be measured by the discharge measurement apparatus 240 can be set in accordance with application of the reaction system 1. The discharge measurement apparatus 240 may include a plurality of sensors so as to be able to measure a plurality of components.

The overall configuration of the reaction system 1 has been described above. Note that the substance-to-be-treated injection block 100 does not have to be close to or abut on the reactor 210. For example, means for transporting the substance to be treated may be provided between the substance-to-be-treated injection block 100 and the reactor 210. The means for transporting the substance to be treated is, for example, a pneumatic apparatus or a belt conveyer. By this means, even when the substance-to-be-treated injection block 100 is provided at a location separated from the reactor 210, the reaction system 1 can preferably supply the substance to be treated 10A to the reactor 210.

A functional configuration of the reaction system 1 will be described next with reference to Fig. 2. Fig. 2 is a block diagram of the reaction system according to the first embodiment. The reaction system 1 includes a control apparatus 260 that controls the respective components of the reaction system 1 to implement functions in the present disclosure.

The control apparatus 260 controls the reaction system 1 to produce the product 10B from the substance to be treated 10A in the producing step. Further, the control apparatus 260, for example, controls at least one of the temperature control apparatus 203, the conveyance apparatus 221, and the cleaning medium supply apparatus 232 based on an amount, a temperature, or the like, of the substance included in the discharge in the cleaning step. In the present disclosure, while the "amount" of the substance included in the discharge is not particularly limited provided that the amount is an amount that can be quantified by measurement equipment, such as a concentration, a volume, a weight and a pressure, the amount may be, for example, a concentration measured by a gas concentration meter and may be expressed in a unit such as parts per million (ppm) and volume percent in a case where the discharge is a gas.

The control apparatus 260 includes, for example, an arithmetic apparatus such as a central processing unit (CPU), a graphics processing unit (GPU) or a micro controller unit (MCU). Further, the control apparatus 260 includes a storage apparatus such as a dynamic random access memory (DRAM) and a flash memory, an interface that communicably connects respective components, and other peripheral circuits. The control apparatus 260 is connected to the temperature control apparatus 203, the drive apparatus 220, a fluid for production control apparatus 270, the first switching unit 231, the second switching unit 241, the third switching unit 251, the cleaning medium supply apparatus 232, the discharge measurement apparatus 240 and an information input/output apparatus 280.

Among the components connected to the control apparatus 260, the temperature control apparatus 203, the drive apparatus 220, the first switching unit 231, the second switching unit 241, the third switching unit 251, the cleaning medium supply apparatus 232 and the discharge measurement apparatus 240 have already been described with reference to Fig. 1, and thus, description will be omitted here.

The fluid for production control apparatus 270 illustrated in Fig. 2 controls an amount of the fluid for production to be supplied to the reactor 210 in the producing step. The fluid for production control apparatus 270 can, for example, operate opening and closing of the supply tube control valve 205. Further, the fluid for production control apparatus 270 can control operation of a pump that pressure-feeds the fluid for production to be supplied to the fluid supply tube 204. In the present disclosure, while the "amount" of the fluid for production is not particularly limited provided that the amount is an amount that can be quantified by measurement equipment, such as a concentration, a volume, a weight, and a pressure, the amount may be a flow rate that can be controlled by a mass flow controller, or the like, like liter per minute in a case where the fluid for production is, for example, a gas.

The discharge measurement apparatus 240 measures components of the discharge in the cleaning step and supplies measurement data to the control apparatus 260. Note that the discharge measurement apparatus 240 may measure components and a temperature of the fluid in the producing step.

The information input/output apparatus 280 includes, for example, a display apparatus for notifying a user of various kinds of information regarding the reaction system 1, and an information input apparatus for accepting predetermined operation from the user.

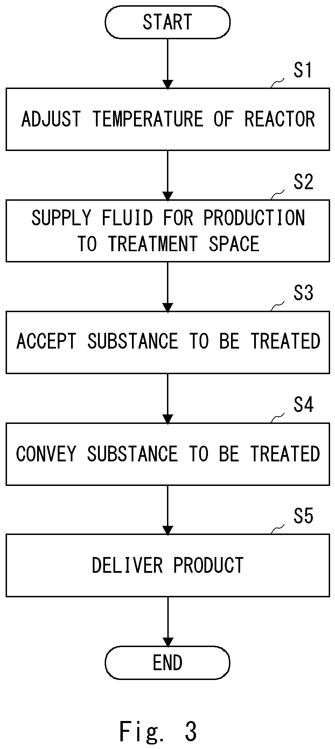

Outline of the producing step to be executed by the reaction system 1 will be described next with reference to Fig. 3. Fig. 3 is a flowchart of the producing step to be executed by the reaction system 1. The flowchart indicated in Fig. 3 can be regarded as indicating processing to be executed by the control apparatus 260. The flowchart indicated in Fig. 3 can be also regarded as operation procedure to be performed by a user who operates the reaction system 1.

First, the reaction system 1 controls the temperature control apparatus 203 to adjust a temperature of the reactor 210 to a predetermined temperature (step S1).

Then, the reaction system 1 controls the fluid for production control apparatus 270 to supply the fluid for production to the treatment space 211 (step S2).

Then, the reaction system 1 accepts the substance-to-be-treated container 10 in the substance-to-be-treated injection block 100 (step S3). As a result of the substance-to-be-treated container 10 being accepted in the substance-to-be-treated injection block 100, the reaction system 1 supplies the substance to be treated 10A stored in the substance-to-be-treated container 10 to the supply port 201.

Then, the reaction system 1 conveys the substance to be treated 10A accepted from the supply port 201 from the upstream side to the downstream side by controlling the drive apparatus 220 to drive the conveyance apparatus 221 (step S4). After the substance to be treated 10A is injected to the reactor 210 from the supply port 201, a predetermined reaction is performed in the treatment space 211, and thereby, the product 10B is generated.

Then, the reaction system 1 delivers the product 10B in the delivery port 202 (step S5). After the reaction system 1 delivers the product 10B, a series of processing ends.

The producing step to be executed by the reaction system 1 has been described above. Note that the reaction system 1 can continuously execute the above-described processing. Thus, the reaction system 1 can continuously deliver the product 10B. Further, in the above-described flowchart, step S1 may be performed after step S2. Step S1 and step S2 may be executed at the same time.

The reaction system 1 can continuously execute the above-described producing step in an environment blocked from the outdoor air. As a result of the reaction system 1 executing such processing, a residue, and the like, adheres to the reactor 210 in the reaction system 1. Thus, the reaction system 1 temporarily stops the producing step and executes the cleaning step.

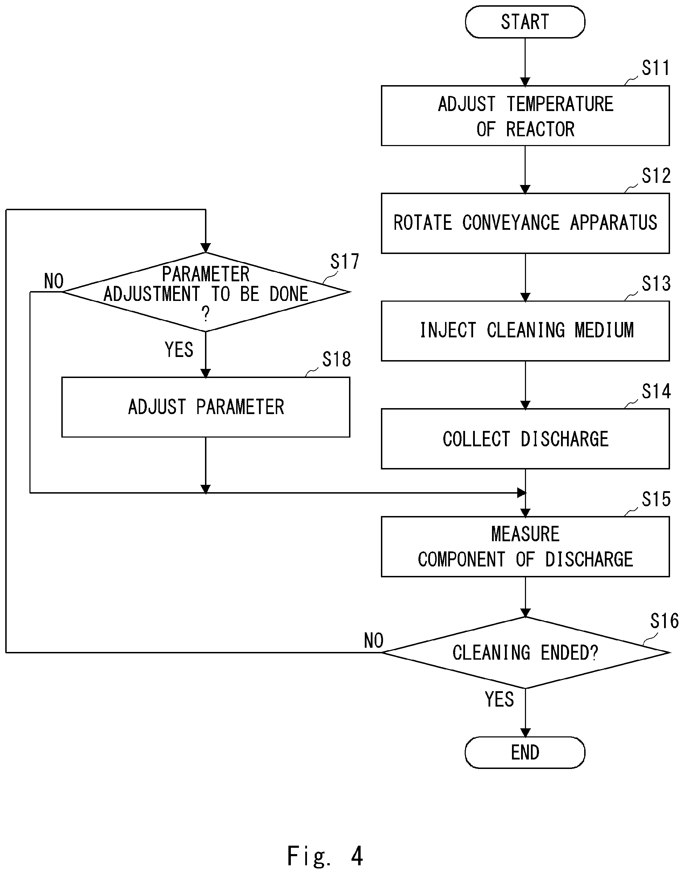

The cleaning step will be described with reference to Fig. 4. Fig. 4 is a flowchart of the cleaning step to be executed by the reaction system. The flowchart indicated in Fig. 4 can be regarded as indicating processing to be executed by the control apparatus 260. The flowchart indicated in Fig. 4 can be also regarded as operation procedure to be performed by the user who operates the reaction system 1.

First, the reaction system 1 controls the temperature control apparatus 203 to adjust the temperature of the reactor 210 (step S11).

Then, the reaction system 1 controls the drive apparatus 220 to drive the conveyance apparatus 221 (step S12). Note that while the purpose of driving the conveyance apparatus 221 in the cleaning step may be conveyance of the cleaning medium, the purpose is not limited to this. The purpose of driving the conveyance apparatus 221 in the cleaning step may be stirring the cleaning medium or the atmosphere including the cleaning medium or encouragement of cleaning by the cleaning medium. Further, the processing may proceed to step S13 while skipping step S12 without driving the conveyance apparatus.

Then, the reaction system 1 controls the cleaning medium supply apparatus 232 to inject the cleaning medium to the reactor 210 (step S13). Alternatively, in a case where the cleaning medium is accepted from the substance-to-be-treated injection block 100, the reaction system 1 injects the accepted cleaning medium to the supply port 201.

Then, the reaction system 1 collects the discharge discharged to the fluid discharge tube 206 by injecting the cleaning medium (step S14).

Then, the reaction system 1 measures components, a temperature and an amount of a substance contained in the discharge by acquiring measurement data from the discharge measurement apparatus 240 in the fluid discharge tube 206 (step S15).

Then, the reaction system 1 determines whether or not to end the cleaning step from the measurement data acquired from the discharge measurement apparatus 240 (step S16). Here, the control apparatus 260 acquires data regarding an injection amount of the cleaning medium injected by the cleaning medium supply apparatus 232 and components of the discharge measured by the discharge measurement apparatus 240 and determines whether or not to continue the cleaning step from the acquired data. More specifically, the reaction system 1 may determine whether or not to end the cleaning step, for example, by monitoring an amount of a toxic substance generated in the reactor 210 and contained in the discharge by the cleaning step. Further, in this event, the reaction system 1 may monitor an elapsed period of the cleaning step and make the above determination in accordance with a relationship between the elapsed period and the amount of the toxic substance. Alternatively, the reaction system 1 may monitor only the elapsed period of the cleaning step and determine to end the cleaning step when a sufficient period has elapsed. Note that in the present disclosure, while the "amount" of the toxic substance contained in the discharge is not particularly limited provided that the amount is an amount that can be quantified by measurement equipment, such as a concentration, a volume, a weight and a pressure, the amount may be, for example, a concentration measured by a gas concentration meter and may be expressed in unit such as ppm and volume percent in a case where the discharge is a gas.

In a case where it is determined to end the cleaning step (step S16: Yes), the reaction system 1 ends the cleaning step. On the other hand, in a case where it is not determined to end the cleaning step (step S16: No), the processing of the reaction system 1 proceeds to step S17.

In step S17, the reaction system 1 determines whether or not to perform parameter adjustment (step S17). The parameter adjustment is, for example, at least one of a temperature of the reactor 210, a driving direction or driving speed of the conveyance apparatus 221, and an injection amount of the cleaning medium among components functioning in the cleaning step. To determine whether or not to perform parameter adjustment, the reaction system 1 may acquire feedback data regarding the temperature of the reactor 210, driving torque or driving speed of the conveyance apparatus 221 as appropriate and may refer to the feedback data.

In a case where it is not determined to perform parameter adjustment (step S17: No), the processing of the reaction system 1 returns to step S15. On the other hand, in a case where it is determined to perform parameter adjustment (step S17: Yes), the processing of the reaction system 1 proceeds to step S18.

In step S18, the reaction system 1 adjusts parameters with reference to a result of the determination in step S17 (step S18). After the parameter adjustment is performed, the processing of the reaction system 1 returns to step S15.

The cleaning step to be performed by the reaction system 1 has been described above. Here, a specific example of the cleaning step to be performed by the reaction system 1 will be described. The reaction system 1, for example, cleans sulfide, or the like, remaining in the reactor 210 using water as the cleaning medium. In this case, the reaction system 1 sets the temperature of the reactor 210, for example, at about 200 degrees and drives the conveyance apparatus 221 at high speed. Then, the reaction system 1 drops water as the cleaning medium from the cleaning medium supply apparatus 232. By this means, a state of the water changes and becomes water vapor in the reactor 210, and the water vapor is further stirred by driving of the conveyance apparatus and can efficiently come into contact with the remaining sulfide, or the like. As a result of the stirred water vapor coming into contact with sulfide, or the like, remaining in the reactor 210, hydrogen sulfide is generated. The fluid collection mechanism 242 collects hydrogen sulfide that is a toxic substance discharged to the fluid discharge tube 206 and water vapor discharged without reacting.

Water vapor has relatively high reactivity, and thus, is appropriate for a case where cleaning is performed by utilizing reaction. Further, water vapor has a larger volume than a volume of water, and thus, relatively easily comes into contact with a residue in a particulate form having a large surface area like sulfide, or the like, remaining in the reactor 210. Thus, even in the cleaning step in which a lot of water has been required in the related art, the reaction system 1 can reduce an amount of water to be used by changing water to water vapor. In this manner, the reaction system 1 can perform efficient cleaning by changing a state of the cleaning medium in the reactor 210 as appropriate.

In this case, the reaction system 1, for example, measures a concentration, or the like, of hydrogen sulfide in the discharge measurement apparatus 240. When reaction between the remaining sulfide and water vapor proceeds as time passes, the concentration of hydrogen sulfide measured in the discharge measurement apparatus 240 can become higher, and inversely, an amount of sulfide remaining in the reactor 210 can be reduced. The measurement result of the concentration, or the like, of the discharge measured by the discharge measurement apparatus 240 in this manner can be calculated, stored, machine-learned and output by the control apparatus 260 so that temporal change of the concentration, or the like, of the discharge can be tracked or predicted. Further, the control apparatus 260 issues a control signal to at least one of the temperature control apparatus 203, the conveyance apparatus 221, and the cleaning medium supply apparatus 232 based on the calculation result.

More specifically, for example, in a case where the concentration of the discharge at past time 0:00 is 1 volume percent, and the concentration of the discharge at current time 0:10 is 1 volume percent, the control apparatus 260 calculates temporal change of the concentration of the discharge as 0. The control apparatus 260 may display, or the like, the calculation result on, for example, an operation panel.

The control apparatus 260 may execute processing of controlling the concentration of the discharge at predetermined future time based on the above calculation. The control apparatus 260 performs calculation of optimizing respective control parameters of the temperature control apparatus 203, the conveyance apparatus 221 and the cleaning medium supply apparatus 232 to make the concentration of the discharge at future time 0:20, for example, 2 volume percent. As a result, the control apparatus 260 may, for example, transmit a control signal that doubles a supply amount of the cleaning fluid to the cleaning medium supply apparatus 232. Note that when the concentration, or the like, of the discharge falls below a predetermined threshold, the reaction system 1 ends the cleaning step.

Note that in the above-described example of the cleaning step, the reaction system 1 may accept, for example, ceramic beads as the cleaning medium from the supply port 201 or may accept slurry containing ceramic beads from the cleaning medium supply apparatus 232. The ceramic beads are used to collide with an inner wall of the reactor 210 to exfoliate the residue. In this case, the injected ceramic beads are delivered to the delivery port 202 along with the residue. The discharge collection mechanism 252 of the reaction system 1 collects the ceramic beads and the residue delivered to the delivery port 202.

The specific example of the cleaning step to be performed by the reaction system 1 has been described above. With the above-described configuration, the reaction system 1 cleans the inside of the reaction system 1 while maintaining a state of being blocked from the outdoor air. In the above-described configuration, the control apparatus 260 may have a function associated with machine learning in the cleaning step. For example, the control apparatus 260 includes a learning model that determines a cleaning condition. More specifically, the control apparatus 260 machine learns a relationship between at least one cleaning condition among the temperature of the reactor 210, an operation state of the conveyance apparatus 221 and a supply amount of the cleaning medium by the cleaning medium supply apparatus 232, and the amount of the toxic substance contained in the discharge. The machine learning described here may be a learning model that is deep learned using, for example, a peak of the amount of the toxic substance contained in the discharge becoming a maximum, as a reward.

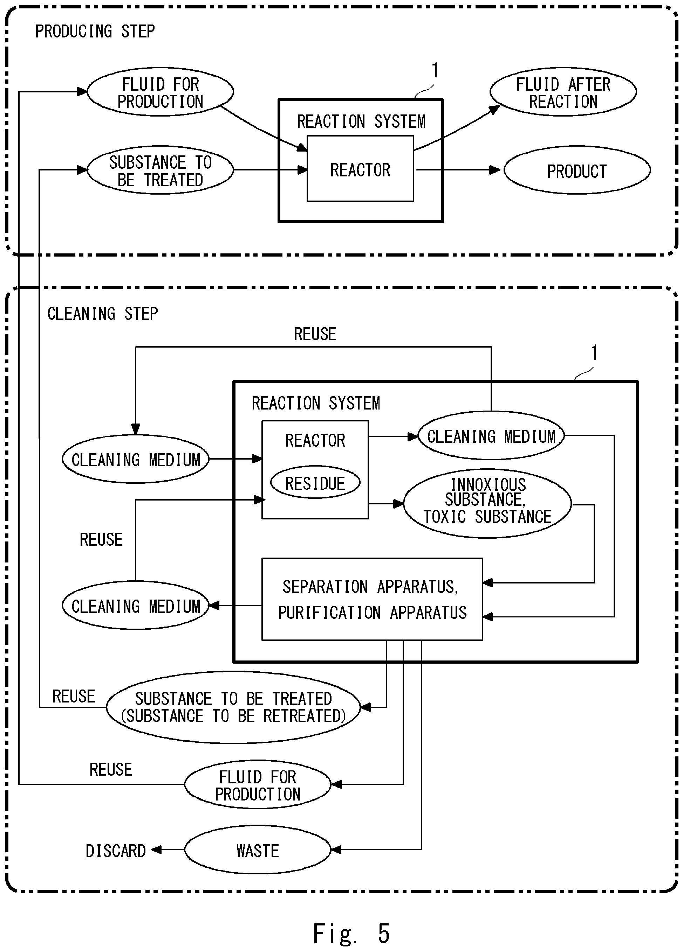

Flow of the substance to be treated by the reaction system 1 will be described next with reference to Fig. 5. Fig. 5 is a view illustrating the flow of the substance to be treated in the reaction system. Fig. 5 illustrates the producing step in an upper part and illustrates the cleaning step in a lower part.

In the producing step in the upper part, the reaction system 1 accepts the fluid for production and the substance to be treated and causes these to react in the reactor. By this means, the reaction system 1 discharges a predetermined product and a fluid after the reaction. Note that the fluid after the reaction may contain the same components as components of the fluid for production.

In the cleaning step illustrated in the lower part, the reaction system 1 accepts the cleaning medium. The cleaning medium may be a liquid like water indicated in the above-described specific example or may be a gas like water vapor. Further, the cleaning medium may be a solid like ceramic beads indicated in the above-described specific example or may be a liquid in which solid particles are suspended. The reaction system 1 accepts the cleaning medium and causes the cleaning medium to react with the residue remaining in the reactor. As a result of this, an innoxious substance, a toxic substance and the cleaning medium are discharged from the reactor. Note that the innoxious substance is a substance not corresponding to a toxic substance.

After the cleaning medium discharged from the reactor is collected, the cleaning medium can be reused as the cleaning medium again. Further, the innoxious substance, the toxic substance and the cleaning medium discharged from the reactor may be collected by a collection mechanism. The innoxious substance, the toxic substance and the cleaning medium collected by the collection mechanism are separated and purified as appropriate by a separation apparatus and a purification apparatus.

After the innoxious substance, the toxic substance and the cleaning medium collected by the collection mechanism are treated by the separation apparatus and the purification apparatus, the cleaning medium can be extracted. In this case, the extracted cleaning medium is reused in the cleaning step. After the collected innoxious substance and toxic substance are treated by the separation apparatus and the purification apparatus, a substance to be treated can be extracted. In this case, the extracted substance to be treated (substance to be retreated) is reused in the producing step. In a similar manner, after the collected innoxious substance and toxic substance are treated by the separation apparatus and the purification apparatus, the fluid for production can be extracted. In this case, the extracted fluid for production is reused in the producing step. Finally, after the collected innoxious substance and toxic substance are treated by the separation apparatus and the purification apparatus, a waste can be extracted. The waste is discarded as appropriate.

Regarding the above-described cleaning step, by utilizing the respective components of the reaction system 1, various cleaning steps can be executed as follows.

For example, the reaction system 1 accepts water as the cleaning medium. The reaction system 1 decomposes the residue remaining in the reactor 210 by water. In this case, for example, the reaction system 1 can adjust an injection amount of water by monitoring an inner pressure of the reactor 210. Further, in this case, progress of cleaning can be monitored by the discharge measurement apparatus 240 or a temperature sensor (not illustrated) attached to the reactor 210 measuring temperature change associated with heat of solution of the residue. Further, gas generated by decomposition is collected by the fluid collection mechanism 242. Note that the fluid collection mechanism 242 may include a burner that burns the collected gas. As a result of the burner burning the gas, the reaction system 1 can detoxify the collected gas.

Further, for example, the reaction system 1 can exfoliate the residue by accepting water as the cleaning medium and causing vibration while switching the driving direction of the conveyance apparatus 221 at high speed. In this case, for example, after the discharge collection mechanism 252 collects water and the residue, by centrifuging the collected discharge, the reaction system 1 can preferably separate water and the residue. In such a cleaning step, the reaction system 1 may, for example, monitor a volume and a weight of the residue in the collected discharge. Such a configuration enables the reaction system 1 to monitor progress of cleaning.

The reaction system 1 can accept ceramic beads as the cleaning medium. In this case, the ceramic beads exfoliate the residue adhering to the reactor 210. The discharge collection mechanism 252 of the reaction system 1 collects the ceramic beads and the exfoliated residue. The reaction system 1 can monitor an amount of the residue by measuring, for example, a volume and a weight in the discharge collection mechanism 252 to monitor progress of cleaning. Further, for example, by the collected discharge being centrifuged, the cleaning medium is separated from the residue.

The reaction system 1 can accept a catalyst that can decompose the residue as the cleaning medium. In this case, the reaction system 1 can monitor progress of cleaning by monitoring the discharged gas and solid and can separate or purify the gas or separate or reuse a solid using the above-described technique.

The reaction system 1 can accept oxygen as the cleaning medium. In this case, the reaction system 1 can burn or oxidize the residue inside the reactor 210 by increasing the temperature of the reactor 210 by the temperature control apparatus 203. Further, in this case, the temperature of the reactor 210 is monitored using a thermometer provided in the discharge measurement apparatus 240. With such a configuration, the reaction system 1 can monitor the temperature inside the reactor 210 with high responsiveness. Thus, the reaction system 1 can safely execute the cleaning step. Note that the gas generated by burning or oxidization can be preferably collected by, for example, a scrubber.

The reaction system 1 can accept inert gas as the cleaning medium. In this case, the reaction system 1 can scallop the residue remaining in the reactor 210 by heating the reactor 210 filled with the inert gas. Note that in a case where gas such as carbon monoxide is generated in the reactor 210 by the cleaning step, the reaction system 1 can collect this by the fluid collection mechanism 242 and can detoxify the gas by burning the gas with a burner.

The reaction system 1 can accept a substance at a relatively low temperature such as liquid water as the cleaning medium after heating the reactor 210 to a higher temperature in advance. The reaction system 1 exfoliates the residue from the reactor 210 by causing thermal impulse in the reactor 210. In this case, to prevent degradation of the reaction system 1 itself, the reaction system 1 executes the cleaning step while monitoring temperature change.

The reaction system 1 can accept a predetermined organic solvent as the cleaning medium. In this case, the reaction system 1 exfoliates the residue by causing the organic solvent to react with the residue. The organic solvent is collected by the fluid collection mechanism 242 and the discharge collection mechanism 252. Further, in this case, the reaction system 1 can distill the collected organic solvent so that the organic solvent can be reused.

The reaction system 1 can accept a predetermined fibrous object as the cleaning medium. The fibrous cleaning medium tangles and conveys the residue exfoliated, for example, as a result of the conveyance apparatus 221 being driven. The reaction system 1 detoxifies the residue and the fibrous cleaning medium, for example, by burning and discards them. The fibrous cleaning medium may be reused after burning, or the residue adhering to the fibrous cleaning medium may be washed with water and reused.

An example of the cleaning step has been described above. Note that the cleaning step to be executed by the reaction system 1 described above is an example and not limited to the above-described content.

The first embodiment has been described above. According to the first embodiment, it is possible to provide a reaction system, and the like, capable of preferably cleaning a reactor in a state of being blocked from outdoor air.

### <Second Embodiment>

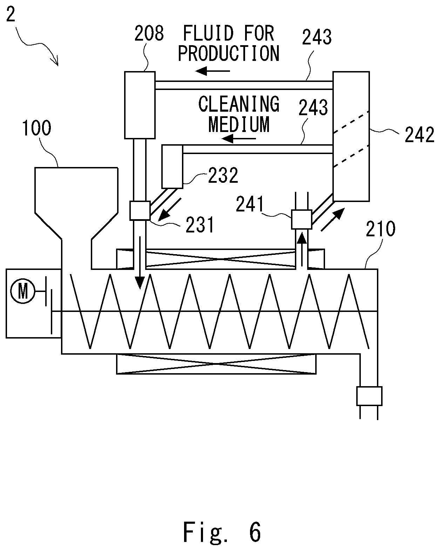

A second embodiment will be described with reference to Fig. 6. Fig. 6 is an overall configuration diagram of a reaction system according to the second embodiment. Note that in Fig. 6, components are omitted as appropriate to facilitate understanding. In a reaction system 2 according to the present embodiment, the fluid collection mechanism 242 further includes a retreatment apparatus including a conveyance path 243 connected so that a collected discharge can be reinjected to a reactor from a supply port or a fluid inlet.

The reaction system 2 according to the second embodiment has a configuration in which a fluid collected by the fluid collection mechanism 242 can be reused. The reaction system 2 includes a fluid for production accumulation unit 208 as a component that accumulates a fluid for production and supplies the fluid for production to the fluid supply tube 204.

In the reaction system 2, the fluid collection mechanism 242 collects a fluid after cleaning via the second switching unit 241. The fluid collection mechanism 242 includes a separation apparatus that separates the collected fluid into the fluid for production and a cleaning medium. The fluid collection mechanism 242 includes a retreatment apparatus that separates the collected fluid into the cleaning medium and the fluid for production.

The fluid collection mechanism 242 supplies the cleaning fluid among the separated fluid to the cleaning medium supply apparatus 232. The cleaning medium supply apparatus 232 receives the cleaning medium from the fluid collection mechanism 242 and reuses the received cleaning fluid in the cleaning step.

The fluid collection mechanism 242 supplies the fluid for production among the separated fluid to the fluid for production accumulation unit 208. The fluid for production accumulation unit 208 reuses the fluid for production received from the fluid collection mechanism 242 in the producing step.

As described above, in the reaction system 2 according to the second embodiment, the fluid for production is generated by the cleaning medium reacting with the residue in the reactor 210 in the cleaning step. Thus, the reaction system 2 collects the cleaning medium along with the fluid for production and then separates and reuses the fluid for production. In this event, the control apparatus 260 may control parameters in the cleaning step by monitoring an amount of the fluid for production contained in the discharge. More specifically, the control apparatus 260 controls at least the temperature of the reactor 210 and the cleaning medium supply apparatus 232 so as to be able to extract components reusable as the fluid for production from the discharge. Thus, according to the second embodiment, it is possible to provide a reaction system, and the like, capable of preferably and efficiently cleaning a reactor in a state of being blocked from outside air.

### <Third Embodiment>

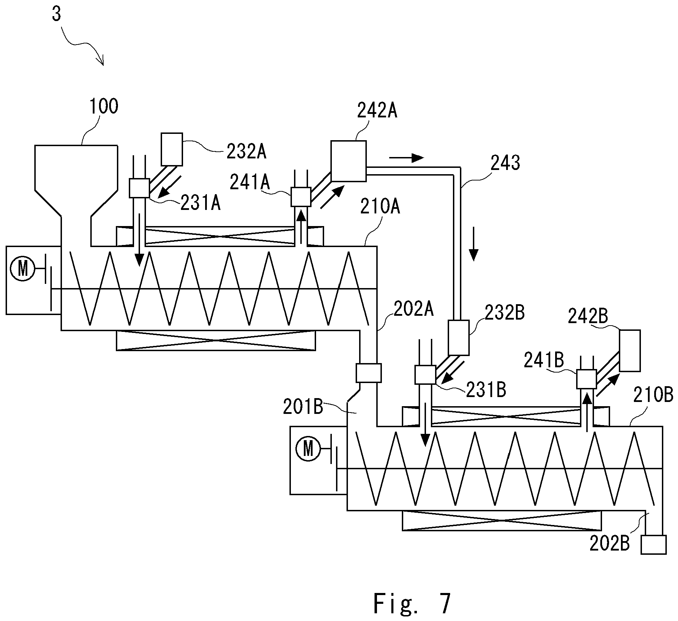

A third embodiment will be described next with reference to Fig. 7. Fig. 7 is an overall configuration diagram of a reaction system 3 according to the third embodiment. The reaction system 3 illustrated in Fig. 3 includes a first reactor 210A and a second reactor 210B as the reactor.

The first reactor 210A accepts a substance to be treated from the substance-to-be-treated injection block 100, executes predetermined treatment and delivers an intermediate product from a delivery port 202A to a supply port 201B in the producing step. The second reactor 210B receives the intermediate product from the first reactor 210A, performs predetermined treatment on the received intermediate product and delivers a product from a delivery port 202B in the producing step.

The reaction system 3 includes a retreatment apparatus in a fluid collection mechanism 242A provided in the first reactor 210A. The fluid collection mechanism 242A includes a conveyance path 243 connected to a cleaning medium supply apparatus 232B provided in the second reactor 210B.

In this manner, the retreatment apparatus connects the fluid collection mechanism 242A connected to the first reactor 210A and a supply port or a fluid inlet connected to the second reactor 210B. By this means, the reaction system 3 is configured so that the second reactor 210B accepts a discharge discharged from the first reactor 210A and performs predetermined retreatment in the cleaning step.

In the reaction system 3 having the above-described configuration, the second reactor 210B performs retreatment on the discharge discharged in a case where the first reactor 210A is cleaned. As described above, according to the third embodiment, it is possible to provide a reaction system, and the like, capable of preferably and efficiently cleaning a reactor in a state of being blocked from outdoor air.

While the present invention has been described above with reference to the embodiments, the present invention is not limited by the above. Various changes that can be understood by a person skilled in the art can be made within a scope of the invention in the configuration and details of the present invention.

This application claims priority to Japanese Patent Application No. 2022-095239 filed on June 13, 2022, which is hereby incorporated by reference in their entirety.

### Industrial Applicability

The present invention is utilized in, for example, a reaction system for producing a battery material.

### Reference Signs List

- 1: REACTION SYSTEM
- 2: REACTION SYSTEM
- 3: REACTION SYSTEM
- 4: REACTION SYSTEM
- 10: SUBSTANCE-TO-BE-TREATED CONTAINER
- 10A: SUBSTANCE TO BE TREATED
- 10B: PRODUCT
- 100: SUBSTANCE-TO-BE-TREATED INJECTION BLOCK
- 101: SUBSTANCE-TO-BE-TREATED INLET
- 102: SUBSTANCE-TO-BE-TREATED SLOT
- 103: DOOR FOR ACCEPTING SUBSTANCE TO BE TREATED
- 104: DOOR FOR INJECTING SUBSTANCE TO BE TREATED
- 110: SUBSTANCE-TO-BE-TREATED ACCEPTANCE SPACE
- 111: BLOCKING MECHANISM
- 200: TREATMENT BLOCK
- 201: SUPPLY PORT
- 202: DELIVERY PORT
- 203: TEMPERATURE CONTROL APPARATUS
- 204: FLUID SUPPLY TUBE
- 205: SUPPLY TUBE CONTROL VALVE
- 206: FLUID DISCHARGE TUBE
- 207: DISCHARGE TUBE CONTROL VALVE
- 208: FLUID FOR PRODUCTION ACCUMULATION UNIT
- 210: REACTOR
- 211: TREATMENT SPACE
- 220: DRIVE APPARATUS
- 221: CONVEYANCE APPARATUS
- 231: FIRST SWITCHING UNIT
- 232: CLEANING MEDIUM SUPPLY APPARATUS
- 240: DISCHARGE MEASUREMENT APPARATUS
- 241: SECOND SWITCHING UNIT
- 242: FLUID COLLECTION MECHANISM
- 243: CONVEYANCE PATH
- 251: THIRD SWITCHING UNIT
- 252: DISCHARGE COLLECTION MECHANISM
- 260: CONTROL APPARATUS
- 270: FLUID FOR PRODUCTION CONTROL APPARATUS
- 280: INFORMATION INPUT/OUTPUT APPARATUS

## Claims

1. A reaction system capable of executing a producing step of producing a predetermined product from a substance to be treated, the reaction system comprising:
a blocking mechanism capable of blocking indoor air from outdoor air;
a reactor that is a cylindrical body including a supply port of a substance to be treated and a delivery port of a product;
a conveyance apparatus that conveys the substance to be treated inside the cylindrical body inside the cylindrical body;
a fluid supply tube connected to a fluid inlet provided in the reactor for supplying a fluid for production;
a fluid discharge tube that discharges a fluid inside the reactor from a fluid outlet provided in the reactor; and
a cleaning medium supply apparatus branching and connected to at least any one of the supply port or the fluid supply tube and capable of injecting a cleaning medium to the reactor as a cleaning step.

2. The reaction system according to claim 1, comprising a collection mechanism connected to at least any one of the fluid discharge tube or the delivery port and collecting at least any one of a fluid or a discharge discharged as a result of the cleaning medium being injected in the cleaning step.

3. The reaction system according to claim 2, wherein the fluid discharge tube further comprises a switching unit that switches between a flow path for collecting the fluid for production in the producing step and a flow path for collecting the discharge in the cleaning step.

4. The reaction system according to claim 2, wherein the collection mechanism further comprises a separation apparatus for separating and collecting a plurality of substances.

5. The reaction system according to claim 2, wherein the collection mechanism further comprises a retreatment apparatus including a conveyance path connected so that the collected discharge can be reinjected to the reactor from the supply port or the fluid inlet.

6. The reaction system according to claim 5, comprising a first reactor, and a second reactor different from the first reactor as the reactor,
wherein the retreatment apparatus is configured to connect the collection mechanism connected to the first reactor with the supply port or the fluid inlet connected to the second reactor, thereby the second reactor accepts the discharge discharged from the first reactor and performs predetermined retreatment.

7. The reaction system according to any one of claims 2 to 6, further comprising:
a temperature control apparatus that controls a temperature of the reactor;
a discharge measurement apparatus that measures an amount of the discharge in the cleaning step; and
a control apparatus that controls the cleaning step by controlling at least one of the temperature control apparatus, the conveyance apparatus, and the cleaning medium supply apparatus based on the measured amount of the discharge.

8. The reaction system according to claim 7, wherein the control apparatus determines whether or not to continue the cleaning step based on an amount of the cleaning medium injected by the cleaning medium supply apparatus and the amount of the discharge measured by the discharge measurement apparatus.

9. The reaction system according to claim 7, wherein the control apparatus controls the cleaning step based on an amount of a substance that is included in the discharge and can be reused in the producing step.

10. The reaction system according to claim 9, wherein the control apparatus controls at least a temperature of the reactor and the cleaning medium supply apparatus so that a substance that can be reused as the fluid for production can be extracted from the discharge.

11. The reaction system according to claim 7, wherein the control apparatus includes a learning model that determines a cleaning condition by machine learning a relationship between at least one cleaning condition among the temperature of the reactor, an operation state of the conveyance apparatus and a supply amount of the cleaning medium, and the amount of the discharge.

12. A cleaning method of a reaction system which comprises:
a partition wall capable of blocking indoor air from outdoor air;
a reactor that is a cylindrical body provided in a sealed space covered by the partition wall and including a supply port of a substance to be treated and a delivery port of a product;
a conveyance apparatus that conveys the substance to be treated inside the cylindrical body inside the cylindrical body;
a fluid supply tube connected to a fluid inlet provided in the reactor for supplying a fluid for production; and
a fluid discharge tube that discharges a fluid inside the reactor from a fluid outlet provided in the reactor,
the reaction system capable of executing a producing step of producing a predetermined product from the substance to be treated, the cleaning method comprising:
injecting a cleaning medium to the reactor from at least any one of the supply port or the fluid supply tube as a cleaning step; and
discharging at least any one of a fluid or a discharge generated as a result of the cleaning medium being injected from at least any one of the fluid discharge tube or the delivery port.

13. The cleaning method according to claim 12, comprising collecting at least any one of the fluid or the discharge discharged as a result of the cleaning medium being injected from at least any one of the fluid discharge tube or the delivery port.

14. The cleaning method according to claim 12, comprising:
controlling a temperature of the reactor;
measuring an amount of the discharge in the cleaning step; and
executing the cleaning step while controlling at least one of the temperature of the reactor, driving of the conveyance apparatus, and an injection amount of the cleaning medium based on the amount of the discharge.

15. The cleaning method according to any one of claims 12 to 14, comprising controlling at least the temperature of the reactor and the injection amount of the cleaning medium based on at least one of a component, an amount, and a temperature of the discharge so that a substance that can be reused as the fluid for production can be extracted from the discharge.

16. The cleaning method according to claim 12, comprising reinjecting at least part of the discharge to the reactor from the supply port or the fluid inlet and performing retreatment.

17. The cleaning method according to claim 16, wherein
the reaction system includes a first reactor and a second reactor different from the first reactor as the reactor, and
at least part of the discharge discharged from the first reactor is injected to the second reactor, and predetermined retreatment is performed.
